# EUROPÄISCHE PATENTSCHRIFT

(11) **EP 3 929 082 B1**
(45) Veröffentlichungstag und Bekanntmachung des Hinweises auf die Patenterteilung: **02.10.2024**
(21) Anmeldenummer: 21175128.4
(22) Anmeldetag: 20.05.2021
(51) Int. Cl.: B64D 1/22, B64D 1/00

(54) **BEFESTIGUNGSVORRICHTUNG ZUM LÖSBAREN BEFESTIGEN EINER LASTVORRICHTUNG AN EINER FÜHRUNGSVORRICHTUNG, TRANSPORTSYSTEM UND LUFTFAHRZEUG MIT EINER BEFESTIGUNGSVORRICHTUNG**
FASTENING DEVICE FOR DETACHABLY FIXING A LOAD DEVICE TO A GUIDING DEVICE, TRANSPORT SYSTEM AND AIRCRAFT WITH A FIXING DEVICE
DISPOSITIF DE FIXATION PERMETTANT DE FIXER DE MANIÈRE AMOVIBLE UN DISPOSITIF DE CHARGE SUR UN DISPOSITIF DE GUIDAGE, SYSTÈME DE TRANSPORT ET AÉRONEF DOTÉ D'UN DISPOSITIF DE FIXATION

(30) Priorität: 22.06.2020 DE 102020116442
(43) Veröffentlichungstag der Anmeldung: 29.12.2021
(73) Patentinhaber: Airbus Defence and Space GmbH, 82024 Taufkirchen (DE)
(72) Erfinder: SCHWEIZER, Romed, 82024 Taufkirchen (DE)
(74) Vertreter: LKGLOBAL Lorenz & Kopf Patentanwalt Attorney at Law PartG mbB

(56) Entgegenhaltungen:
- WO-A1-2014/015445
- WO-A2-2019/239413
- US-A1- 2019 092 468
- US-A1- 2019 241 267

## Beschreibung

### Gebiet der Erfindung

Die vorliegende Erfindung betrifft die Befestigung von Lasten für den Transport. Insbesondere betrifft die Erfindung eine Befestigungsvorrichtung zum lösbaren Befestigen einer Lastvorrichtung an einer Führungsvorrichtung, ein Transportsystem sowie ein Luftfahrzeug mit einer Befestigungsvorrichtung.

### Hintergrund der Erfindung

Die Beförderung von Lasten, beispielsweise Containern, kommt in einer Vielzahl von technischen Gebieten zum Einsatz. Beispielsweise können Lasten mit Hilfe von Baukränen oder Helikoptern befördert und durch die Luft transportiert werden. Von besonderer Bedeutung ist dabei die präzise und sichere Befestigung der Lasten, beispielswiese an Hakenvorrichtungen und dergleichen. Da diese Hakenvorrichtungen zum Befestigen der Last oftmals an flexiblen oder sogar schwingenden Führungseinheiten, wie zum Beispiel Seilen oder Ketten, angebracht sind, ist es schwierig, diese Hakenvorrichtungen mittels herkömmlicher Steuerungsverfahren an der zu befördernden Last zu befestigen. Wird beispielsweise ein Baukran oder ein Helikopter über der Last positioniert, so ist das Greifen der Last mittels der Hakenvorrichtung durch das Schwingen des Seils oder der Kette erschwert. Eine solche Hakenvorrichtung wird üblicherweise manuell durch Hilfspersonal ausgerichtet, um die Last in die Hakenvorrichtung einhängen zu können.

EP 2 338 794 A1 und US 2011 / 0 147 328 A1 beschreiben eine Hebevorrichtung zum Ersetzen dynamischer oder statischer Komponenten von Drehflügelflugzeugen. Die Hebevorrichtung umfasst ein Hebemittel, um die Komponenten zwischen einer Installations- oder Entnahmeposition und einer Lade- oder Entladeposition in der Nähe des Flugzeugs zu bewegen. Die Hebevorrichtung umfasst auch eine Stützstruktur, auf der das Hebemittel montiert ist, und eine Stützeinrichtung, die starr an der Stützstruktur angebracht ist und so ausgelegt ist, dass sie auf dem Flugzeugrahmen des Flugzeugs aufliegt und direkt an diesem befestigt ist.

US 2019/0241267 A1 beschreibt Laststabilisierungssysteme und Verfahren zur Stabilisierung von Schwingbewegungen angehängter Lasten. Die Laststabilitätssysteme umfassen eine vollautomatische, sich selbst mit Energie versorgende Vorrichtung, die Schub verwendet, um einer seitlichen und Drehbewegung einer externen Last entgegenzuwirken und diese zu steuern.

US 2019/0092468 A1 beschreibt eine Einheit, die an einer Unterseite einer Drohne montiert werden kann, um eine Befestigung an der Drohne anzubringen und dann die Befestigung zu lösen, nachdem die Drohne in der Luft ist. Die Einheit ist mit einer einziehbaren Stange ausgestattet, die über eine Fernbedienung gesteuert werden kann. Im Gebrauch wird eine Befestigung an der Stange aufgehängt, und sobald die Drohne in die Luft geht, kann ein Benutzer die Stange per Fernbedienung zurückziehen, um die zuvor an der Stange aufgehängte Befestigung fallen zu lassen.

### Zusammenfassung der Erfindung

Es ist eine Aufgabe der vorliegenden Erfindung, die Befestigung von Lasten an beweglichen Führungsvorrichtungen zu erleichtern.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist eine Befestigungsvorrichtung zum lösbaren Befestigen einer Lastvorrichtung an einer Führungsvorrichtung angegeben. Die Befestigungsvorrichtung, welche auch als Hakenvorrichtung bezeichnet werden kann, weist eine Tragstruktur mit einer Befestigungseinheit und einer Verschlusseinheit auf. Die Befestigungseinheit ist mit der Führungseinheit verbindbar und die Verschlusseinheit ist zur Aufnahme oder zum lösbaren Befestigen der Lastvorrichtung ausgebildet. Die Verschlusseinheit weist mindestens drei Auskragungen auf, welche in vorgegebenen Abständen entlang eines Umfangs der Tragstruktur angeordnet sind. Zumindest einige Auskragungen oder jede Auskragung der mindestens drei Auskragungen weisen/weist ein Verschlusselement auf, welches zwischen einem geschlossenen Zustand und einem geöffneten Zustand bewegbar ist.

Eine solche Befestigungsvorrichtung erleichtert das Befestigen von Lastvorrichtungen bzw. Lasten an beweglichen oder schwingenden Führungsvorrichtungen, um anschließend die befestigte Lastvorrichtung sicher transportieren zu können. Insbesondere kann die erfindungsgemäße Befestigungsvorrichtung wie eine Art Kranhaken wirken, der entlang seines Umfangs in regelmäßigen Abständen Auskragungen, beispielsweise Haken, mit Verschlusselementen aufweist, so dass ein einfaches Eingreifen der Befestigungsvorrichtung mit der Lastvorrichtung bei verschiedensten Orientierungen der Befestigungsvorrichtung in Bezug auf die Lastvorrichtung ermöglicht wird. Wenn beispielsweise die Befestigungsvorrichtung wie ein Kranhaken am Ende eines hängenden oder eines frei schwingenden flexiblen Seils befestigt ist, könnte es umständlich sein, die Befestigungsvorrichtung in Bezug auf die zu befestigende Lastvorrichtung auszurichten bzw. zu orientieren. Die geometrische Ausgestaltung der erfindungsgemäßen Befestigungsvorrichtung führt jedoch vorteilhafterweise dazu, dass die Befestigungsvorrichtung nicht erst aufwendig in Bezug auf die zu befestigende Lastvorrichtung ausgerichtet werden muss, sondern ein Befestigen der Lastvorrichtung an der Befestigungseinheit aus mehreren Raumrichtungen ermöglicht wird. Mit anderen Worten wird die Wahrscheinlichkeit erhöht, dass die Lastvorrichtung bereits beim ersten Einhängeversuch "korrekt" in Bezug auf die Befestigungsvorrichtung ausgerichtet ist und somit erfolgreich an der Befestigungsvorrichtung befestigt werden kann. Die zu befestigenden Lastvorrichtungen können standardisierte Container oder dergleichen sein, die mit Hilfe der erfindungsgemäßen kronenförmigen Befestigungsvorrichtung bzw. Hakenvorrichtung aus jedweder Richtung in Bezug auf die Befestigungsvorrichtung eingehangen und befestigt werden können.

Dadurch wird nicht zuletzt die Sicherheit beim Befestigen der Last erhöht, da auf entsprechendes Hilfspersonal bzw. Bodenpersonal zum manuellen Einhängen der Lastvorrichtung in die Befestigungsvorrichtung verzichtet werden kann. Dementsprechend werden Personalkosten und auch die benötigte Zeit zum Einhängen der Lastvorrichtung reduziert. Ebenso sind keine komplexen Ausrichtmanöver für die Befestigungsvorrichtung mehr erforderlich. Die Befestigungsvorrichtung braucht nicht oder nur selten gewartet zu werden, da auf komplexe mechanische Geometrien, Aktuatoren und Mechanismen verzichtet wird. Weiterhin kommt die erfindungsgemäße Befestigungsvorrichtung ohne eine elektrische oder hydraulische Versorgung aus.

Die Befestigungsvorrichtung ist vorzugsweise mit einer Führungsvorrichtung eines Luftfahrzeugs, insbesondere eines schwebeflugfähigen Luftfahrzeugs oder eines Helikopters, verbunden. Die Führungsvorrichtung kann dabei Teil des Luftfahrzeugs sein oder aber an diesem befestigt sein. Die Führungsvorrichtung kann jedoch auch ein Teil der Befestigungsvorrichtung selbst sein.

Die Führungsvorrichtung kann ein Befestigungsseil umfassen, beispielsweise in Form eines hängenden Metallseils oder dergleichen. Die Führungsvorrichtung kann jedoch auch andere Formen umfassen, wie zum Beispiel die einer hängenden Metallkette oder dergleichen. Die Führungsvorrichtung kann an einem ersten Ende der Führungsvorrichtung an dem Luftfahrzeug befestigt sein. An einem zweiten Ende der Führungsvorrichtung kann die Befestigungsvorrichtung vorgesehen bzw. an die Führungsvorrichtung angebunden sein, um die Lastvorrichtung mit der Führungsvorrichtung zu koppeln.

Die Befestigungsvorrichtung umfasst eine Tragstruktur, welche zum Beispiel in Form einer Metallkonstruktion oder eines Metallgerüstes ausgebildet ist. Andere Materialien, wie beispielsweise faserverstärkte Kunststoffe für die Tragstruktur sind möglich. Die Tragstruktur wirkt als Verbindungselement zwischen der Befestigungseinheit, über welche die Befestigungsvorrichtung mit der Führungsvorrichtung verbunden ist, und der Verschlusseinheit, mittels welcher die Lastvorrichtung an der Befestigungsvorrichtung befestigt wird. Die Tragstruktur kann in einer Draufsicht eine Kreisform aufweisen, an deren Umfang die Auskragungen nebeneinander angeordnet sind. Die Auskragungen können Teil der Tragstruktur sein bzw. in diese integriert sein. Die Tragstruktur kann eine kreisförmige Grundplatte oder ein kreisförmiges Grundgestell aufweisen, wobei entlang eines äußeren Umfangs der kreisförmigen Grundplatte bzw. des kreisförmigen Grundgestells die Auskragungen nebeneinander angeordnet sind.

Die Auskragungen können in Form von Vorsprüngen oder Ausläufern am äußeren Umfang der Tragstruktur angeordnet sein.

Gemäß der Erfindung sind dabei mindestens drei Auskragungen an der Tragstruktur vorgesehen. Beispielsweise können aber auch mehr als mindestens drei Auskragungen, also vier, fünf, sechs, sieben, acht, neun, zehn, elf, zwölf, dreizehn, vierzehn, usw. Auskragungen umfasst sein. Die Auskragungen können in verschiedenen Winkeln von der Grundplatte bzw. dem Grundgestell der Tragstruktur abstehen und/oder ein von der Grundplatte bzw. dem Grundgestell abstehendes sägezahnähnliches Muster oder wellenähnliches Muster bilden, das sich entlang des äußeren Umfangs der Grundplatte bzw. des Grundgestells erstreckt. Mit anderen Worten kann die Befestigungsvorrichtung eine kronenähnliche Gestalt aufweisen. Dies wird in der Figurenbeschreibung noch genauer erläutert werden.

Die Auskragungen können derart entlang des kreisförmigen Umfangs der Tragstruktur angeordnet sein, dass zwischen jeweils benachbarten Auskragungen eine Aussparung gebildet wird. Die so gebildeten Aussparungen sind zur Aufnahme oder zum Eingreifen einer Lastbefestigungskomponente der Lastvorrichtung ausgelegt. Das bedeutet, dass die Lastbefestigungskomponente der Lastvorrichtung in zumindest einer oder zwei der Aussparungen angeordnet ist, wenn die Lastvorrichtung mittels der Befestigungsvorrichtung an der Führungsvorrichtung befestigt ist. Vorzugsweise erstreckt sich die Lastbefestigungskomponente der Lastvorrichtungen durch genau zwei Aussparungen, wenn die Lastvorrichtung an der Befestigungsvorrichtung befestigt ist. Die Aussparungen, die Auskragungen und die Verschlusselemente können gemeinsam die Verschlusseinheit der Befestigungsvorrichtung bilden.

Die Auskragungen können ein erstes Ende aufweisen, welches mit der Grundplatte bzw. dem Grundgestell der Tragstruktur verbunden ist, sowie ein zweites Ende, über welches die Verschlusselemente mit den jeweils zugehörigen Auskragungen gekoppelt sind.

Jeweils genau ein Verschlusselement kann an jeweils genau einer zugehörigen Auskragung der mindestens drei Auskragungen befestigt sein. Die Verschlusselemente zeigen dabei im geschlossenen Zustand ausgehend von einer Auskragung, an der sie jeweils befestigt sind, zu einer benachbarten Auskragung, an dessen Oberfläche sie im geschlossenen Zustand anliegen. Die Verschlusselemente sind beweglich, insbesondere rotierbar an den Auskragungen befestigt. Dabei können die Verschlusselemente jeweils ein erstes Ende aufweisen, über welches das Verschlusselement mit der jeweils zugehörigen Auskragung beweglich oder gelenkig verbunden ist, und ein zweites Ende, welches zwischen einem geschlossenen Zustand und einem geöffneten Zustand frei beweglich im Raum schwenkbar ist. Die Verschlusselemente können eine längliche Form aufweisen bzw. stabförmig oder stangenförmig ausgebildet sein. Das erste Ende des stabförmigen Verschlusselements kann dabei an einem Kopplungspunkt gelenkig mit der jeweils zugehörigen Auskragung gekoppelt sein und das zweite Ende des Verschlusselements kann um diesen Kopplungspunkt schwenkbar sein.

Gemäß einer Ausführungsform sind die Auskragungen jeweils in gleichen Abständen zueinander entlang des Umfangs der Tragstruktur angeordnet.

Das bedeutet, dass die Abstände zwischen jeweils benachbarten Auskragungen gleich sind. Dies kann insbesondere für sämtliche Abstände zwischen den jeweils benachbarten Auskragungen gelten. Die Abstände können lineare Abstände zwischen Mittelachsen jeweils benachbarter Auskragungen sein. Beispielsweise können die Abstände lineare Abstände zwischen zwei benachbarten Auskragungsspitzen oder lineare Abstände zwischen Mittelpunkten oder Mittelachsen zweier benachbarter Verbreiterungen der Auskragungen sein. Die Abstände können alternativ entlang von Kreisbogensegmenten zwischen Mittelachsen jeweils benachbarter Auskragungen gemessen werden. Beispielsweise können die Abstände entlang von Kreisbogensegmenten zwischen zwei benachbarten Auskragungsspitzen oder entlang von Kreisbogensegmenten zwischen Mittelpunkten oder Mittelachsen zweier benachbarter Verbreiterungen der Auskragungen gemessen werden. In diesem Fall sind die Abstände jeweils durch Kreisbogenabschnitte zwischen benachbarten Auskragungen angegeben, wobei sämtliche Kreisbogenabschnitte zwischen benachbarten Auskragungen die gleiche Länge aufweisen. Somit kann eine regelmäßige Verteilung der Auskragungen entlang des kreisförmigen Umfangs der Tragstruktur bereitgestellt werden, so dass die Befestigung der Lastvorrichtung aus einer beliebigen Richtung bezüglich des Umfangs der Tragstruktur erleichtert wird.

Gemäß der Erfindung bilden jeweils zwei benachbarte Auskragungen gemeinsam eine Aussparung zur Aufnahme der Lastvorrichtung oder eines Teils der Lastvorrichtung, beispielsweise einer Lastbefestigungskomponente.

Die Aussparung kann durch die Oberflächen der benachbarten Auskragungen gebildet sein. Somit wird jeweils eine Aussparung durch zwei entlang des Umfangs benachbarte Auskragungen gebildet. Auf die gleiche Weise werden sämtliche zwischen den Auskragungen liegende Aussparungen entlang des Umfangs gebildet. In die jeweilige Aussparung der Verschlusseinheit kann somit die Lastvorrichtung oder der Teil der Lastvorrichtung eingreifen. Vorzugsweise erstreckt sich die Lastbefestigungskomponente der Lastvorrichtung durch genau zwei Aussparungen, wenn die Lastvorrichtung an der Befestigungsvorrichtung befestigt ist bzw. mit dieser in Eingriff steht.

Gemäß einer Ausführungsform weist das Verschlusselement ein erstes Ende auf, welches das Verschlusselement an der Auskragung befestigt, wobei das Verschlusselement ferner ein zweites Ende aufweist, welches in dem geschlossenen Zustand mit einer benachbarten Auskragung in Kontakt steht und in dem geöffneten Zustand von der benachbarten Auskragung räumlich getrennt ist.

Das erste Ende des Verschlusselements kann jeweils im Bereich einer Spitze der zugehörigen Auskragung drehbar befestigt sein. Dies kann über einen Kopplungspunkt erfolgen, der das Verschlusselement an der Auskragung drehbar bzw. rotierbar befestigt, so dass das zweite Ende des Verschlusselement ein freies Ende bildet, das frei beweglich im Raum schwenkbar ist. Auf diese Weise kann das Verschlusselement vom geschlossenen Zustand in den geöffneten Zustand und umgekehrt überführt werden.

Gemäß einer Ausführungsform weist das Verschlusselement von jeder der Auskragungen einen Vorspannmechanismus auf, welcher dazu ausgeführt ist, das Verschlusselement in dem geschlossenen Zustand vorzuspannen.

Der Vorspannmechanismus kann daher so konfiguriert sein, dass ohne Aufbringen einer externen Kraft, das Verschlusselement stets im geschlossenen Zustand verbleibt, bei dem das zweite Ende des Verschlusselements mit der jeweils benachbarten Auskragung in Kontakt steht. Wird das Verschlusselement aus seinem geschlossenen Zustand in seinen geöffneten Zustand ausgelenkt, so erhöht sich die Federkraft, die entgegen dieser Auslenkbewegung wirkt und das Verschlusselement wieder zurück in den geschlossenen Zustand treibt. Der Vorspannmechanismus kann ein Federmechanismus sein. Insbesondere umfasst der Vorspannmechanismus eine Feder, beispielsweise eine Torsionsfeder.

Gemäß einer Ausführungsform ist das Verschlusselement durch Aufbringen einer äußeren Kraft auf das Verschlusselement ausschwenkbar, um somit das Verschlusselement von dem geschlossenen Zustand in den geöffneten Zustand zu überführen.

Die äußere Kraft kann zum Beispiel durch direkten Kontakt zwischen der Lastvorrichtung, insbesondere der Lastbefestigungskomponente der Lastvorrichtung entstehen, wenn die Befestigungsvorrichtung gegen die Lastbefestigungsvorrichtung gedrückt wird. Dabei kann die Lastbefestigungskomponente der Lastvorrichtung beispielsweise gegen das Verschlusselement gedrückt werden, wodurch sich das Verschlusselement öffnet, so dass die Lastbefestigungskomponente in die Aussparung gleiten bzw. einrasten kann. Im Anschluss, wenn sich die Lastbefestigungskomponente in der Aussparung befindet und nicht mehr gegen das Verschlusselement drückt, klappt bzw. schnappt das Verschlusselement aufgrund der durch den Vorspannmechanismus ausgeübten Vorspannkraft wieder in den geschlossenen Zustand.

Gemäß einer Ausführungsform weisen die Auskragungen jeweils ein freies Ende oder ein zweites Ende auf, an welchem das Verschlusselement angebracht ist. Ferner weisen die Auskragungen jeweils einen Verbindungsabschnitt auf, welcher das freie Ende bzw. das zweite Ende der Auskragung mit der Tragstruktur verbindet, wobei das freie Ende bzw. das zweite Ende der Auskragung gegenüber dem Verbindungsabschnitt der Auskragung verbreitert ist.

Die Auskragungen können dabei jeweils eine längliche Form aufweisen, die sich ausgehend von der Tragstruktur zum freien Ende hin verjüngt, wobei sich im Bereich des freien Endes wiederum eine Verbreiterung, beispielsweise eine Materialverbreiterung, der jeweiligen Auskragung befindet. Mit anderen Worten kann sich ein Querschnitt des Verbindungsabschnitts ausgehend von der Tragstruktur hin zum freien Ende verkleinern, so dass für die mindestens drei Auskragungen der Eindruck einer Sägezahn- oder Wellenform der Auskragungen entsteht, die sich um den Umfang der Tragstruktur erstreckt. Es kann vorgesehen sein, dass die Verbreiterung den Abschluss oder einen Spitzenbereich der jeweiligen Auskragung bildet. An diesem verbreiterten Bereich der Auskragung kann jeweils das Verschlusselement angeordnet sein.

Gemäß einer Ausführungsform weist die Tragstruktur ein Grundgestell mit einer kreisförmigen Grundfläche auf, wobei die Auskragungen jeweils in gleichen Abständen zueinander entlang eines Umfangs der kreisförmigen Grundfläche angeordnet sind. Ferner ist das Grundgestell im Bereich eines Mittelpunktes der kreisförmigen Grundfläche mit der Befestigungseinheit verbunden.

Das Grundgestell kann ein metallisches Material, beispielsweise einen Stahl, oder aber ein faserverstärktes Kunststoffmaterial umfassen. Weitere Materialien sind möglich. Das Grundgestell kann die Form einer runden bzw. kreisförmigen Platte aufweisen, wobei die kreisförmige Platte die kreisförmige Grundfläche definiert. Die Befestigungseinheit kann sich dabei vom Mittelpunkt der Grundfläche und senkrecht zur Grundfläche, quasi nach oben erstrecken, um eine Verbindung bzw. Befestigung mit der Führungsvorrichtung bereitzustellen. Die Befestigungsvorrichtung kann einen Abrollmechanismus umfassen, welcher dazu ausgeführt ist, die Länge einer seilförmigen Führungsvorrichtung, an der die Befestigungsvorrichtung befestigt ist, zu verändern oder einzustellen.

Gemäß einer Ausführungsform weist die Verschlusseinheit im Wesentlichen eine Zylinderform auf oder die Verschlusseinheit weist im Wesentlichen eine Kegelstumpfform auf.

Ob eine Zylinderform oder eine Kegelstumpfform vorliegt, ist davon abhängig, in welchem Winkel die jeweiligen Auskragungen in Bezug auf die Grundfläche des Grundgestells der Tragstruktur angeordnet sind. Sind die Auskragungen zum Beispiel senkrecht zur Grundfläche angeordnet, so ergibt sich eine zylinderförmig erscheinende Verschlusseinheit. Sind die Auskragungen dagegen in einem Winkel zur Grundfläche angeordnet, der sich von 90° unterscheidet, so ergibt sich eine schräge Anstellung der Auskragungen gegenüber der Grundfläche des Grundgestells, so dass die Verschlusseinheit kegelstumpfförmig erscheint. Die Auskragungen können jeweils in einem Winkel zwischen 80° und 140° gegenüber der Grundfläche angeordnet sein. Wenn die Auskragungen beispielsweise in einem Winkel von 80° geneigt gegenüber der Grundfläche angeordnet sind, so ergibt sich eine Kegelstumpfform, bei der die Auskragungen hin zum freien Ende der Auskragungen gegenüber der Grundfläche nach innen geneigt sind. Wenn die Auskragungen hingegen in einem Winkel von 140° geneigt gegenüber der Grundfläche angeordnet sind, so ergibt sich eine Kegelstumpfform, bei der die Auskragungen hin zum freien Ende der Auskragungen gegenüber der Grundfläche nach außen geneigt sind. Es kann vorgesehen sein, dass sämtliche Auskragungen dieselbe Neigung bzw. Ausrichtung bezüglich der Grundfläche aufweisen.

Gemäß einer Ausführungsform sind zumindest einige der mindestens drei Auskragungen gegenüber einer zentralen Achse der Tragstruktur geneigt angeordnet, wobei die zentrale Achse der Tragstruktur eine Mittelachse des Umfangs der Tragstruktur bildet.

Die zentrale Achse kann eine Flächennormale zur Grundfläche des Grundgestells der Tragstruktur sein. Die Mittelachse bzw. die zentrale Achse kann damit durch den Flächenmittepunkt der kreisförmigen Grundfläche des Grundgestells der Tragstruktur verlaufen. Die Mittelachse bzw. die zentrale Achse können im Wesentlichen in einer Erstreckungsrichtung einer beispielsweise seilförmigen Führungseinheit liegen. Dies kann der Fall sein, wenn die Befestigungsvorrichtung an die seilförmige Führungseinheit gekoppelt ist oder daran aufgehangen ist.

Erstrecken sich die Auskragungen jeweils parallel zur zentralen Achse der Tragstruktur, so ergibt sich eine zylinderförmig erscheinende Verschlusseinheit. Erstrecken sich die Auskragungen wiederum in einem Winkel zur zentralen Achse, der sich von 0° unterscheidet, so ergibt sich eine schräge Anstellung der Auskragungen gegenüber der Grundfläche des Grundgestells, so dass die Verschlusseinheit kegelstumpfförmig erscheint.

Gemäß einem Aspekt der Erfindung ist ein Transportsystem angegeben. Das Transportsystem umfasst eine Befestigungsvorrichtung, wie zuvor und nachfolgend beschrieben, sowie eine Führungsvorrichtung, wobei die Führungsvorrichtung ein bewegliches Kopplungselement aufweist, welches eine der folgenden Komponenten umfasst: ein Seil, eine Kette, einen Draht, einen Riemen, einen Strang, ein Band, einen Strick, eine Kordel oder eine Leine.

Die Führungsvorrichtung kann daher ein flexibles längliches Element sein, mit welchem die Befestigungsvorrichtung über die Befestigungseinheit gekoppelt ist. Die Befestigungseinheit kann einen Abrollmechanismus vorsehen, um die Länge der Führungsvorrichtung einzustellen.

Das Transportsystem kann ein mobiles Transportsystem sein. Beispielsweise kann das Transportsystem ein Kransystem, wie beispielsweise ein Baukran oder ein Verladekran, oder aber ein Fahrzeug sein. Insbesondere kann das Transportsystem ein Luftfahrzeug, wie beispielsweise ein Hubschrauber bzw. ein Helikopter, sein.

Gemäß einem weiteren Aspekt der Erfindung ist ein Luftfahrzeug mit einer Befestigungsvorrichtung, wie zuvor und nachfolgend beschrieben, angegeben.

Dabei kann das Luftfahrzeug die Führungsvorrichtung und die damit verbundene Befestigungsvorrichtung aufweisen, so dass mittels der erfindungsgemäßen Befestigungsvorrichtung ein Lufttransport der Lastvorrichtung ermöglicht wird. Das Luftfahrzeug kann ein schwebeflugfähiges bemanntes oder unbemanntes Luftfahrzeug sein. Beispielsweise ist das Luftfahrzeug ein senkrechtstartfähiges Luftfahrzeug wie ein Hubschrauber bzw. Helikopter oder eine Drohne.

### Kurze Beschreibung der Figuren

- Fig. 1: zeigt eine perspektivische Ansicht einer Befestigungsvorrichtung gemäß einem Ausführungsbeispiel.
- Fig. 2A: zeigt eine Detailansicht eines in einem geschlossenen Zustand befindlichen Verschlusselements einer Befestigungsvorrichtung gemäß einem Ausführungsbeispiel.
- Fig. 2B: zeigt eine Draufsicht auf eine Befestigungsvorrichtung mit Verschlusselementen in geschlossenem Zustand gemäß einem Ausführungsbeispiel.
- Fig. 3A: zeigt eine Detailansicht eines in einem geöffneten Zustand befindlichen Verschlusselements einer Befestigungsvorrichtung gemäß einem Ausführungsbeispiel.
- Fig. 3B: zeigt eine Draufsicht auf eine Befestigungsvorrichtung mit Verschlusselementen in geöffnetem Zustand gemäß einem Ausführungsbeispiel.
- Fig. 4A: zeigt eine Detailansicht eines in einem geschlossenen Zustand befindlichen Verschlusselements einer Befestigungsvorrichtung und einer mit der Befestigungsvorrichtung in Eingriff stehenden Lastbefestigungskomponente einer befestigten Lastvorrichtung gemäß einem Ausführungsbeispiel.
- Fig. 4B: zeigt eine Draufsicht auf eine Befestigungsvorrichtung mit Verschlusselementen in geschlossenem Zustand und auf eine mit der Befestigungsvorrichtung in Eingriff stehenden Lastbefestigungskomponente einer befestigten Lastvorrichtung gemäß einem Ausführungsbeispiel.
- Fig. 5: zeigt eine Lastvorrichtung mit einer Lastbefestigungskomponente gemäß einem Ausführungsbeispiel.
- Fig. 6A: zeigt ein Luftfahrzeug vor dem Befestigen einer Lastvorrichtung mittels einer Befestigungsvorrichtung gemäß einem Ausführungsbeispiel.
- Fig. 6B: zeigt ein Luftfahrzeug beim oder nach dem Befestigen einer Lastvorrichtung mittels einer Befestigungsvorrichtung gemäß einem Ausführungsbeispiel.
- Fig. 7A: zeigt ein Luftfahrzeug mit einem Erfassungssystem vor dem Befestigen einer Lastvorrichtung mittels einer Befestigungsvorrichtung gemäß einem Ausführungsbeispiel.
- Fig. 7B: zeigt ein Luftfahrzeug mit einem Erfassungssystem beim oder nach dem Befestigen einer Lastvorrichtung mittels einer Befestigungsvorrichtung gemäß einem Ausführungsbeispiel.

### Detaillierte Beschreibung beispielhafter Ausführungsformen

Die Darstellungen in den Figuren sind schematisch und nicht maßstäblich. Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

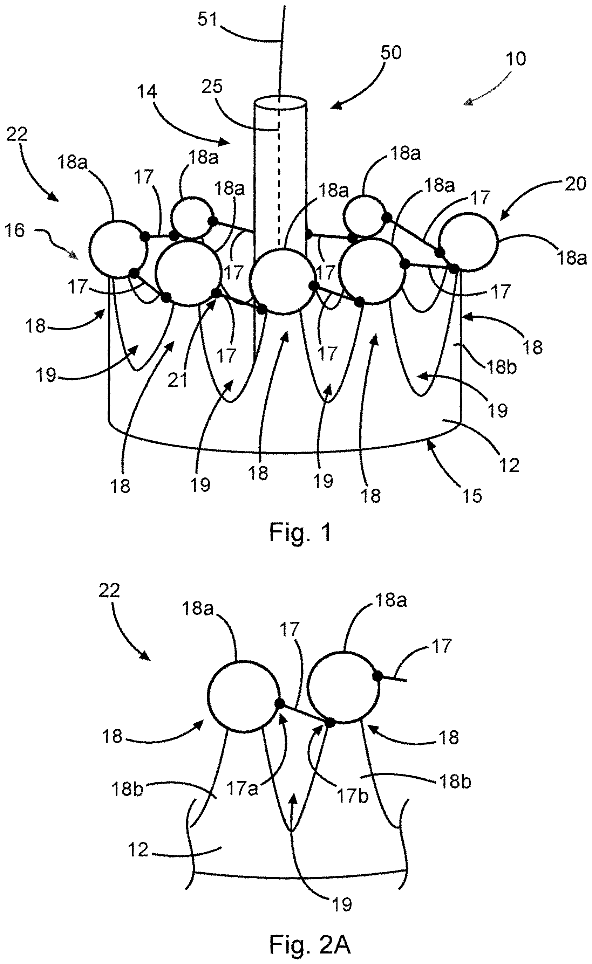

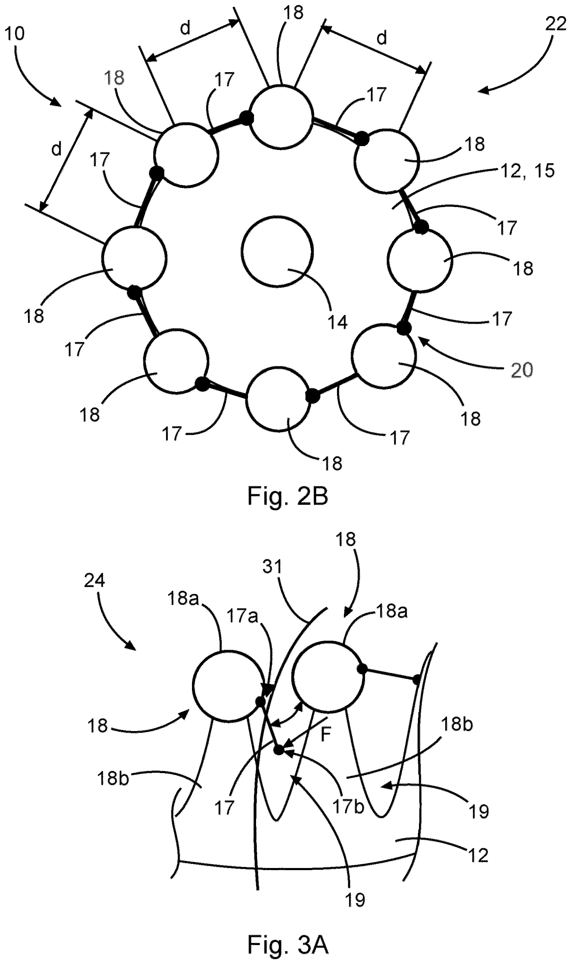

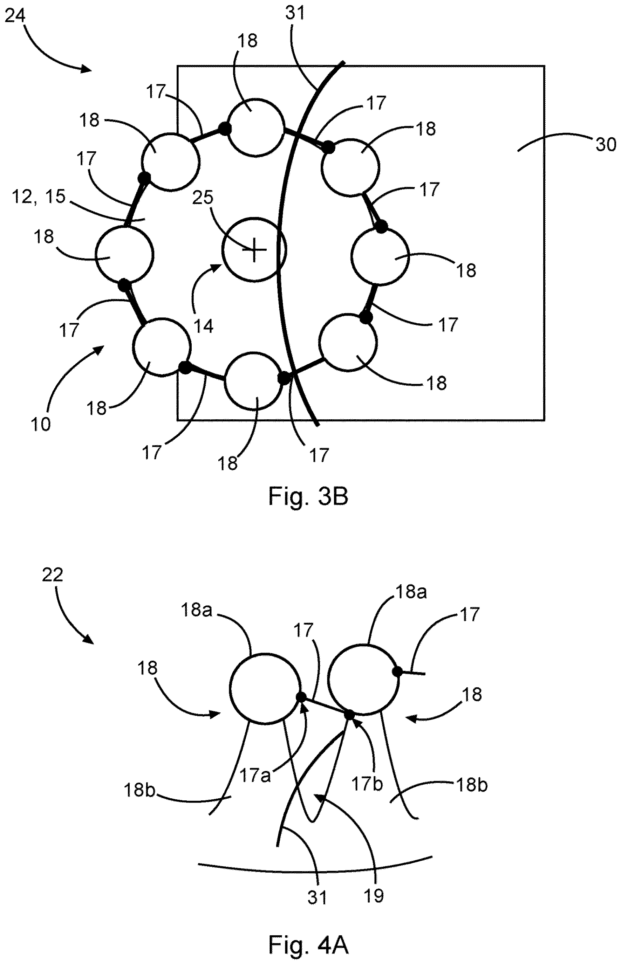

Fig. 1 zeigt eine perspektivische Ansicht einer Befestigungsvorrichtung 10 zum lösbaren Befestigen einer nicht dargestellten Lastvorrichtung an einer teilweise dargestellten Führungsvorrichtung 50. Die Befestigungsvorrichtung 10 umfasst eine Tragstruktur 12 mit einer Befestigungseinheit 14 und einer Verschlusseinheit 16, wobei die Befestigungseinheit 14 mit der Führungseinheit 50 verbunden ist. Die Verschlusseinheit 16 ist zum lösbaren Befestigen der Lastvorrichtung ausgebildet ist. Die Verschlusseinheit 16 weist insbesondere mindestens drei Auskragungen 18 auf, welche in vorgegebenen Abständen d entlang eines Umfangs 20 der Tragstruktur 12 angeordnet sind (vgl. Fig. 2B). Jede Auskragung 18 der mindestens drei Auskragungen 18 weist ein Verschlusselement 17 auf, welches zwischen dem in Fig. 1 dargestellten geschlossenen Zustand 22 und einem beispielsweise in Fig. 3A und 3b gezeigten geöffneten Zustand 24 bewegbar ist.

Die Auskragungen 18 können in die Tragstruktur 12 integriert sein oder an dieser befestigt sein. Dabei können die Auskragungen 18 aus einer kreisförmigen Grundplatte bzw. einem kreisförmigen Grundgestell der Tragstruktur 12 hervorstehen und somit als Ausläufer oder Ausleger angesehen werden, welche sich entlang des Umfangs der Tragstruktur 12 in Form einer Sägezahnstruktur oder einer Wellenstruktur erstrecken, so dass sich der Eindruck einer kronenähnlichen Hakenvorrichtung 10 ergibt. In der Fig. 1 ist eine Konfiguration der Befestigungsvorrichtung 10 mit genau acht Auskragungen 18 gezeigt, wobei eine Auskragung 18 durch die Befestigungseinheit 14 verdeckt ist.

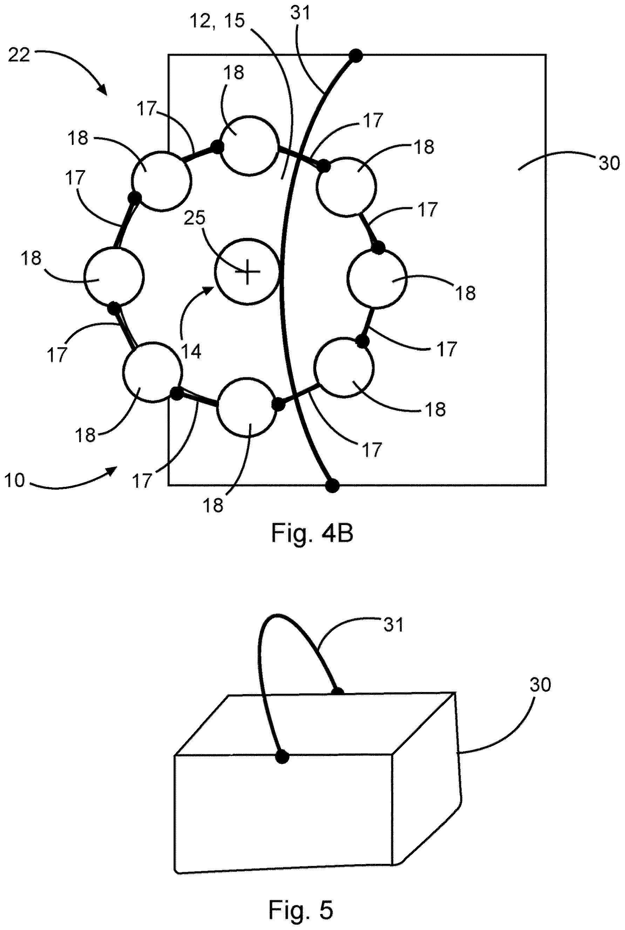

Jeweils zwei benachbarte Auskragungen 18 bilden gemeinsam eine Aussparung 19 zur Aufnahme der nicht dargestellten Lastvorrichtung, insbesondere einer Lastbefestigungskomponente der Lastvorrichtung. Die Aussparungen 19 sind jeweils durch zwei benachbarte Auskragungen 18 sowie durch ein sich im geschlossenen Zustand 22 befindliches Verschlusselement 17 definiert bzw. eingegrenzt. Auf diese Weise bildet die Aussparung 19 im geschlossenen Zustand 22 des Verschlusselements 17 eine Öffnung, durch welche sich eine Lastbefestigungskomponente der Lastvorrichtung erstrecken kann. Dies wird mit Bezug zu den Figuren 4A und 4B ersichtlich. In der Fig. 1 ist eine Konfiguration der Befestigungsvorrichtung 10 mit genau acht Aussparungen 19 gezeigt, die jeweils zwischen zwei benachbarten Auskragungen 18 entlang des Umfangs 20 angeordnet sind.

Die Verschlusselemente 17 sind längliche, insbesondere stabförmige oder stangenförmige Elemente, die jeweils an einem Kopplungspunkt 21 an einer zugehörigen Auskragung 18 befestigt und um diesen Kopplungspunkt 21 schwenkbar bzw. drehbar sind. Wie in Fig. 1 für einen Kopplungspunkt 21 dargestellt, befindet sich dieser an einem freien Ende 18a der Auskragung 18. Analog dazu können Kopplungspunkte 21 an sämtlichen verbleibenden Auskragungen 18 vorgesehen sein.

Die Auskragungen 18 weisen also jeweils ein freies Ende 18a auf, an welchem das Verschlusselement 17 angebracht ist, sowie einen Verbindungsabschnitt 18b (in Fig. 1 der Übersichtlichkeit halber nur einmal dargestellt), welcher das freie Ende 18a der jeweiligen Auskragung 18 mit der Tragstruktur 12 verbindet. Ebenfalls in Fig. 1 zu erkennen ist, dass das freie Ende 18a der Auskragung 18 gegenüber dem Verbindungsabschnitt 18b der Auskragung 18 verbreitert ist. Der verbreiterte Bereich des freien Endes 18a der Auskragung 18 kann, wie in Fig. 1 dargestellt, im Wesentlichen eine Kugelform aufweisen.

Die Verschlusselemente 17 stehen in dem in Fig. 1 gezeigten geschlossenen Zustand 22 mit jeweils einer benachbarten Auskragung 18, insbesondere einem freien Ende 18a der benachbarten Auskragung 18, in Kontakt. Beim Öffnen der Verschlusselemente 17 werden diese von der benachbarten Auskragung 18 weggedreht so, dass zumindest eines oder einige der Verschlusselemente 17 in einem geöffneten Zustand 24, wie in den Figuren 3A und 3B gezeigt, von der benachbarten Auskragung 18 räumlich getrennt sind.

In der in Fig. 1 dargestellten Konfiguration weist die Verschlusseinheit 16 im Wesentlichen eine Zylinderform auf. Dabei sind die Auskragungen 18 in etwa parallel zu einer zentralen Achse 25 der Tragstruktur 12 ausgerichtet, was bedeutet, dass sämtliche Auskragungen 18 senkrecht aus einer in Fig. 1 verdeckten Grundplatte bzw. einem Grundgestell der Tragstruktur 12 herausragen. Die zentrale Achse 25 der Tragstruktur 12 bildet eine Mittelachse 25 des Umfangs 20 der Tragstruktur 12.

Die Befestigungseinheit 14 ist zylinderförmig ausgebildet und dient zur Befestigung der Tragstruktur 12 und damit der gesamten Befestigungsvorrichtung 10 an der in Fig. 1 nur teilweise dargestellten Führungsvorrichtung 50. Die Führungsvorrichtung 50 kann ein seilartiges Element 51 umfassen, mit welchem die Befestigungsvorrichtung 10 hängend an einem nicht dargestellten Transportmittel, beispielsweise einem Luftfahrzeug, befestigt ist.

Fig. 2A zeigt eine Detailansicht eines in einem geschlossenen Zustand 22 befindlichen Verschlusselements 17 einer Befestigungsvorrichtung 10. Das Verschlusselement 17 ist ein stabförmiges oder stangenförmiges längliches Element, welches ein erstes Ende 17a und ein zweites Ende 17b aufweist. Das erste Ende 17a ist mittels eines Kopplungspunktes am zweiten Ende 18a bzw. freien Ende 18a der Auskragung 18 befestigt, wobei der Kopplungspunkt eine Gelenkverbindung des Verschlusselements 17 mit der Auskragung 18 bereitstellt. Wie in Fig. 2A zu erkennen ist, liegt das zweite Ende 17b des Verschlusselements 17 im geschlossenen Zustand 22 am freien Ende 18a der benachbarten Auskragung 18 an bzw. steht mit dem freien Ende 18a in Kontakt. Die dadurch gebildete Aussparung 19 ist daher eine durch die benachbarten Auskragungen 18 und das geschlossene Verschlusselement 17 definierte Öffnung, die zur Aufnahme einer Lastbefestigungskomponente geeignet ist.

Fig. 2B zeigt eine Draufsicht auf die Befestigungsvorrichtung 10 mit Verschlusselementen 17 in geschlossenem Zustand 22, das heißt eine Draufsicht auf die in Fig. 1 dargestellte Befestigungsvorrichtung 10. Die Tragstruktur 12 der Befestigungsvorrichtung 10 weist ein Grundgestell 15, zum Beispiel eine Grundplatte 15, auf, welches in der Draufsicht kreisförmig ausgebildet ist. Das Grundgestell 15 verbindet die auf dem Grundgestell 15 zentral angeordnete Befestigungseinheit 14 mit den in Umfangsrichtung des Grundgestells 15 angeordneten Auskragungen 18. Im dargestellten geschlossenen Zustand 22 sind sämtliche der jeweils benachbarten Auskragungen 18 durch Verschlusselemente 17 verbunden, die sich jeweils in etwa in Umfangsrichtung erstrecken. Benachbarte Auskragungen 18 sind durch gleiche Abstände d voneinander beabstandet. Dies kann, obwohl nur für drei Abstände d dargestellt, für sämtliche Abstände zwischen den jeweils benachbarten Auskragungen 18 entlang des Umfangs 20 gelten. Der Abstand d kann dabei als linearer Abstand zwischen den Mittelpunkten oder Mittelachsen benachbarter Auskragungen 18 gemessen werden, wie in Fig. 2B dargestellt, oder als Kreisbogenlänge, die in Bezug auf das jeweils zwischen den Mittelachsen der Auskragungen 18 liegende Kreisbogensegment gemessen wird.

Fig. 3A zeigt eine Detailansicht eines in einem geöffneten Zustand 24 befindlichen Verschlusselements 17. Dabei ist das zweite Ende 17b des Verschlusselements 17 ausgeschwenkt bzw. ausgelenkt und damit räumlich von der benachbarten Auskragung 18 getrennt. Die durch Doppelpfeil gekennzeichnete Auslenkungsbewegung des Verschlusselements 17 erfolgt um den Kopplungspunkt, an dem das Verschlusselement 17 gelenkig und damit drehbar mit dem freien Ende 18a der Auskragung 18 verbunden ist.

Das Verschlusselement 17 der jeweiligen Auskragungen 18 weist einen Vorspannmechanismus auf, welcher dazu ausgeführt ist, das Verschlusselement 17 in dem in den Figuren 1, 2A und 2B dargestellten geschlossenen Zustand 22 vorzuspannen. Durch Aufbringen einer äußeren Kraft F (durch Pfeil dargestellt) auf das Verschlusselement 17, insbesondere auf das zweite Ende 17b des Verschlusselements 17 kann dieses ausgeschwenkt werden, um somit das Verschlusselement 17 von dem geschlossenen Zustand 22 in den geöffneten Zustand 24 zu überführen. Die Kraft F kann beim Befestigungsvorgang durch Zusammenstoßen der Lastbefestigungskomponente 31 mit dem Verschlusselement 17 hervorgerufen werden, so dass das Verschlusselement 17 entgegen einer Vorspannkraft des Vorspannmechanismus aufgedrückt bzw. geöffnet wird.

Im geöffneten Zustand 24 kann nun die Lastbefestigungskomponente 31 der nicht dargestellten Lastvorrichtung in die Aussparung 19 aufgenommen werden bzw. in diese eingreifen. Die Lastbefestigungskomponente 31 kann zwischen den Verbindungsabschnitten 18b der benachbarten Auskragungen 18 aufgenommen sein, wenn die Lastvorrichtung an der Befestigungsvorrichtung 10 befestigt ist.

Fig. 3B zeigt eine Draufsicht der in Fig. 3A dargestellten Befestigungsvorrichtung 10 mit zwei Verschlusselementen 17 in geöffnetem Zustand 24. Dies kann die Konfiguration der Befestigungsvorrichtung 10 während eines Befestigungsvorgangs sein, bei dem die Lastvorrichtung 30 mittels der Lastbefestigungskomponente 31 an der Befestigungsvorrichtung 10 befestigt wird. Die Lastbefestigungskomponente 31 erstreckt sich über die beiden in geöffnetem Zustand 24 dargestellten Verschlusselemente 17, die somit aufgedrückt werden, so dass die Lastbefestigungskomponente 31 in die Aussparungen 19 zwischen den Auskragungen 18 hineingelangen und eingreifen kann.

Fig. 4A zeigt eine Detailansicht eines in einem geschlossenen Zustand 22 befindlichen Verschlusselements 17 der Befestigungsvorrichtung 10 und einer mit der Befestigungsvorrichtung 10 in Eingriff stehenden Lastbefestigungskomponente 31 einer nicht dargestellten befestigten Lastvorrichtung. Dies kann der Zustand sein, nachdem die Lastbefestigungskomponente 31 bei geöffnetem Zustand 24 des Verschlusselements 17, wie in den Figuren 3A und 3B dargestellt, in der Aussparung 19 in Eingriff gekommen ist.

Mit Bezug zu den Figuren 4A und 4B wurde die Aussparung 19 wiederum verschlossen, indem das entsprechende Verschlusselement 17 wieder in den geschlossenen Zustand 22 überführt wurde, bei dem das zweite Ende 17b des Verschlusselements 17 wieder mit dem freien Ende 18a der benachbarten Auskragung 18 in Kontakt steht. Zu erkennen ist auch, dass die Lastbefestigungskomponente 31 nun in der durch die benachbarten Auskragungen 18 und das Verschlusselement 17 gebildeten Aussparung 19 eingefangen ist, so dass die Lastvorrichtung sicher an der Befestigungsvorrichtung 10 befestigt ist und transportiert werden kann.

Fig. 4B zeigt die entsprechende Draufsicht auf die in Fig. 4A dargestellte Befestigungsvorrichtung 10 mit sämtlichen Verschlusselementen 17 in geschlossenem Zustand 22. Die Lastbefestigungskomponente 31 der Lastvorrichtung 30 steht mit genau zwei Aussparungen 19 (hier unter den entsprechenden Verschlusselementen 17 befindlich) in Eingriff, so dass die Lastvorrichtung 30 sicher an der Befestigungsvorrichtung 10 befestigt ist und die Lastvorrichtung 30 bei geschlossenem Zustand 22 der Verschlusselemente 17 transportiert werden kann.

Durch die in Bezug auf die Figuren 1 bis 4B beschriebene Befestigungsvorrichtung 10 kann das Befestigen von Lastvorrichtungen 30 bzw. Lasten 30 an beweglichen oder schwingenden Führungsvorrichtungen 50 erheblich erleichtert werden. Insbesondere kann die Befestigungsvorrichtung 10 wie eine Art Kranhaken wirken, der entlang seines Umfangs 20 in regelmäßigen Abständen Auskragungen 18 mit Verschlusselementen 17 aufweist, so dass ein einfaches Eingreifen der Befestigungsvorrichtung 10 mit der Lastvorrichtung 30 bei verschiedensten Orientierungen der Befestigungsvorrichtung 10 in Bezug auf die Lastvorrichtung 30 ermöglicht wird. Die geometrische Ausgestaltung der Befestigungsvorrichtung 10 führt insbesondere dazu, dass die Befestigungsvorrichtung 10 nicht erst aufwendig in Bezug auf die zu befestigende Lastvorrichtung 30 ausgerichtet werden muss, sondern ein Befestigen der Lastvorrichtung 30 an der Befestigungsvorrichtung 10 aus mehreren Richtungen ermöglicht wird. Durch das um den Umfang 20 der Tragstruktur 12 sich widerholende gleiche Muster der Befestigungsvorrichtung 10 ist es unerheblich, aus welcher Richtung die Lastbefestigungskomponente 31 der Lastvorrichtung 30 in Bezug auf die Befestigungsvorrichtung 10 letztlich ergriffen wird.

Fig. 5 zeigt eine beispielhafte Lastvorrichtung 30 mit einer Lastbefestigungskomponente 31. Die Lastvorrichtung 30 kann eine Last wie zum Beispiel ein Container, eine Kiste, ein Behälter oder dergleichen sein. Die Lastbefestigungskomponente 31 kann ein flexibles seilförmiges Element sein wie zum Beispiel ein Seil, eine Kette, ein Draht, ein Riemen, ein Strang, ein Band, ein Strick, eine Kordel oder eine Leine. Die Lastbefestigungskomponente 31 kann mit der Lastvorrichtung 30 verbunden bzw. an dieser befestigt sein.

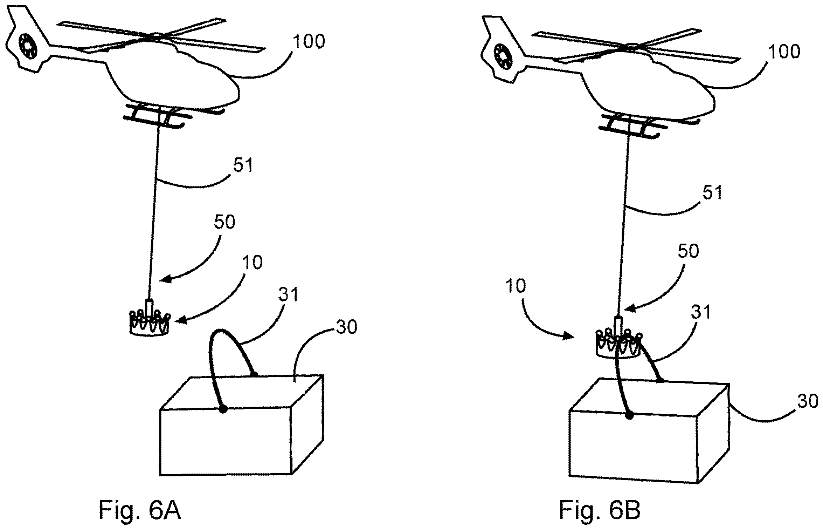

Fig. 6A zeigt ein Luftfahrzeug 100, insbesondere einen Helikopter, mit der Befestigungsvorrichtung 10. Dabei ist das Luftfahrzeug 100 vor dem Befestigen der Lastvorrichtung 30 mittels der Befestigungsvorrichtung 10 gezeigt. Die Befestigungsvorrichtung 10 kann eine Art Hakenkomponente zum Greifen der Lastbefestigungskomponente 31 sein. Die Befestigungsvorrichtung 10 ist frei hängend oder schwingend über die Führungsvorrichtung 50, welche eine seilartige Komponente 51 darstellt, an dem Luftfahrzeug 100 befestigt. In dem in Fig. 6A dargestellten Zustand befinden sich sämtliche Verschlusselemente 17 in geschlossenem Zustand 22.

Fig. 6B zeigt das Luftfahrzeug 100 beim oder nach dem Befestigen der Lastvorrichtung 30 mittels der Befestigungsvorrichtung 10. Beim Befestigen der Lastvorrichtung 30 mittels der Befestigungsvorrichtung 10 werden einige der Verschlusselemente 17, vorzugsweise genau zwei Verschlusselemente 17 in den geöffneten Zustand 24 gebracht, so dass die Lastbefestigungskomponente 31 in die zwei zugehörigen Aussparungen 19 eingreifen kann (vgl. Figuren 1 bis 4B). Nach dem Befestigen der Lastvorrichtung 30 mittels der Befestigungsvorrichtung 10 werden die zuvor geöffneten Verschlusselemente 17 wieder in den geschlossenen Zustand gebracht, wobei die Lastbefestigungskomponente 31 mit den beiden zugehörigen Aussparungen 19 in Eingriff steht. Die Lastvorrichtung 30 kann nun durch das Luftfahrzeug 100 transportiert werden.

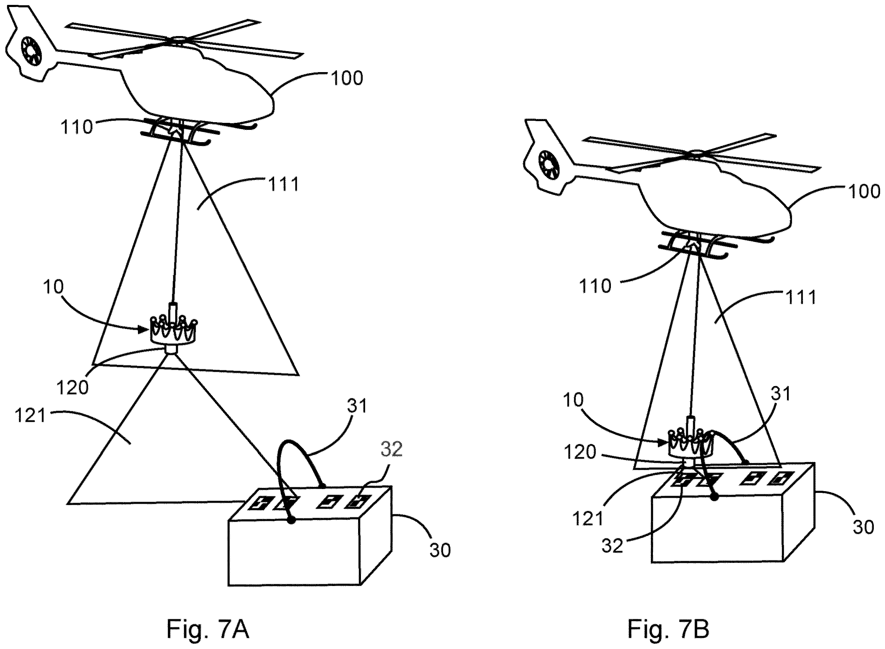

Fig. 7A zeigt, dass das Luftfahrzeug 100 ein Erfassungssystem 110, 120 mit zwei Erfassungseinheiten 110, 120 umfassen kann. Die Erfassungseinheiten 110, 120 können optische Erfassungseinheiten wie beispielsweise Kameras sein. Fig. 7A zeigt das Luftfahrzeug wiederum vor dem Befestigen der Lastvorrichtung 30 mittels der Befestigungsvorrichtung 10. Die Erfassungseinheiten 110, 120 unterstützen dabei die Ausrichtung der Befestigungsvorrichtung 10 bezüglich der Lastvorrichtung 30, insbesondere bezüglich der Lastbefestigungskomponente 31. Dabei ist eine erste Erfassungseinheit 110 am Luftfahrzeug selbst angebracht und deckt einen Erfassungsbereich 111 ab. Die erste Erfassungseinheit 110 ist dazu ausgeführt, Informationen über eine Position und/oder Orientierung der Befestigungsvorrichtung 10 und/oder der Lastvorrichtung 30 bereitzustellen. Dies kann eine absolute Position und/oder Orientierung sein oder aber eine relative Position und/oder Orientierung bezüglich des Luftfahrzeugs 100. Eine zweite Erfassungseinheit 110 ist an der Befestigungsvorrichtung 10 angebracht und deckt einen Erfassungsbereich 121 ab. Die zweite Erfassungseinheit 120 ist dazu ausgeführt, Informationen über eine Position und/oder Orientierung der Lastvorrichtung 30 oder der Lastbefestigungskomponente 31 bereitzustellen. Insbesondere können durch die zweite Erfassungseinheit 120 Markierungen 32 auf der Lastvorrichtung 30 erkannt und/oder ausgelesen werden, womit die Lastvorrichtung 30 identifiziert werden kann. Die Informationen von der ersten Erfassungseinheit 110 und der zweiten Erfassungseinheit 120 können durch eine nicht dargestellte Steuerungseinheit des Luftfahrzeugs 100 zur Steuerung des Luftfahrzeugs 100 verwendet werden.

Fig. 7B zeigt das in Fig. 7A dargestellte Luftfahrzeug 100 mit dem Erfassungssystem 110. 120 beim oder nach dem Befestigen der Lastvorrichtung 30 mittels der Befestigungsvorrichtung 10.

## Patentansprüche

1. Befestigungsvorrichtung (10) zum lösbaren Befestigen einer Lastvorrichtung (30) an einer Führungsvorrichtung (50), aufweisend:
eine Tragstruktur (12) mit einer Befestigungseinheit (14) und einer Verschlusseinheit (16);
wobei die Befestigungseinheit (14) mit der Führungseinheit (50) verbindbar ist;
wobei die Verschlusseinheit (16) zum lösbaren Befestigen der Lastvorrichtung (30) ausgebildet ist;
wobei die Verschlusseinheit (16) mindestens drei Auskragungen (18) aufweist, welche in vorgegebenen Abständen (d) entlang eines Umfangs (20) der Tragstruktur (12) angeordnet sind;
wobei jede Auskragung (18) der mindestens drei Auskragungen (18) ein Verschlusselement (17) aufweist, welches zwischen einem geschlossenen Zustand (22) und einem geöffneten Zustand (24) bewegbar ist;
wobei jeweils zwei benachbarte Auskragungen (18) gemeinsam eine Aussparung (19) zur Aufnahme der Lastvorrichtung (30) oder eines Teils (31) der Lastvorrichtung bilden.

2. Befestigungsvorrichtung (10) nach Anspruch 1,
wobei die Auskragungen (18) jeweils in gleichen Abständen (d) zueinander entlang des Umfangs (20) der Tragstruktur (12) angeordnet sind.

3. Befestigungsvorrichtung (10) nach einem der vorhergehenden Ansprüche,
wobei das Verschlusselement (17) ein erstes Ende (17a) aufweist, welches das Verschlusselement (17) an der Auskragung (18) befestigt;
wobei das Verschlusselement (17) ein zweites Ende (17b) aufweist, welches in dem geschlossenen Zustand (22) mit einer benachbarten Auskragung (18) in Kontakt steht und in dem geöffneten Zustand (24) von der benachbarten Auskragung (18) räumlich getrennt ist.

4. Befestigungsvorrichtung (10) nach einem der vorhergehenden Ansprüche,
wobei das Verschlusselement (17) der jeweiligen Auskragungen (18) einen Vorspannmechanismus aufweist, welcher dazu ausgeführt ist, das Verschlusselement (17) in dem geschlossenen Zustand (22) vorzuspannen.

5. Befestigungsvorrichtung (10) nach einem der vorhergehenden Ansprüche,
wobei das Verschlusselement (17) durch Aufbringen einer äußeren Kraft (F) auf das Verschlusselement (17) ausschwenkbar ist, um somit das Verschlusselement (17) von dem geschlossenen Zustand (22) in den geöffneten Zustand (24) zu überführen.

6. Befestigungsvorrichtung (10) nach einem der vorhergehenden Ansprüche,
wobei die Auskragungen (18) jeweils ein freies Ende (18a) aufweisen, an welchem das Verschlusselement (17) angebracht ist;
wobei die Auskragungen (18) jeweils einen Verbindungsabschnitt (18b) aufweisen, welcher das freie Ende (18a) der Auskragung (18) mit der Tragstruktur (12) verbindet;
wobei das freie Ende (18a) der Auskragung (18) gegenüber dem Verbindungsabschnitt (18b) der Auskragung (18) verbreitert ist.

7. Befestigungsvorrichtung (10) nach einem der vorhergehenden Ansprüche,
wobei die Tragstruktur (12) ein Grundgestell (15) mit einer kreisförmigen Grundfläche aufweist;
wobei die Auskragungen (18) jeweils in gleichen Abständen (d) zueinander entlang eines Umfangs (20) der kreisförmigen Grundfläche angeordnet sind;
wobei das Grundgestell (15) im Bereich eines Mittelpunktes der kreisförmigen Grundfläche mit der Befestigungseinheit (14) verbunden ist.

8. Befestigungsvorrichtung (10) nach einem der vorhergehenden Ansprüche,
wobei die Verschlusseinheit (16) im Wesentlichen eine Zylinderform aufweist; oder
wobei die Verschlusseinheit (16) im Wesentlichen eine Kegelstumpfform aufweist.

9. Befestigungsvorrichtung (10) nach einem der vorhergehenden Ansprüche,
wobei zumindest einige der mindestens drei Auskragungen (18) gegenüber einer zentralen Achse (25) der Tragstruktur (12) geneigt angeordnet sind;
wobei die zentrale Achse (25) der Tragstruktur (12) eine Mittelachse (25) des Umfangs (20) der Tragstruktur (12) bildet.

10. Transportsystem (100), aufweisend:
eine Befestigungsvorrichtung (10) nach einem der vorhergehenden Ansprüche,
eine Führungsvorrichtung (50),
wobei die Führungsvorrichtung (50) ein bewegliches Kopplungselement (51) umfasst, welches ausgewählt ist aus der Gruppe umfassend: ein Seil, eine Kette, einen Draht, einen Riemen, einen Strang, ein Band, einen Strick, eine Kordel oder eine Leine.

11. Luftfahrzeug (100) mit einer Befestigungsvorrichtung (10) nach einem der Ansprüche 1 bis 9.

## Claims

1. Fastening device (10) for releasably fastening a load device (30) to a guiding device (50), having:
a load-bearing structure (12) with a fastening unit (14) and with a closure unit (16);
wherein the fastening unit (14) is able to be connected to the guiding unit (50);
wherein the closure unit (16) is configured for releasable fastening of the load device (30);
wherein the closure unit (16) has at least three projections (18) which are arranged with predefined spacings (d) along a periphery (20) of the load-bearing structure (12);
wherein each projection (18) of the at least three projections (18) has a closure element (17) which is able to be moved between a closed state (22) and an open state (24) ;
wherein in each case two adjacent projections (18) together form a cutout (19) for receiving the load device (30) or a part (31) of the load device.

2. Fastening device (10) according to Claim 1, wherein the projections (18) are each arranged with equal spacings (d) to one another along the periphery (20) of the load-bearing structure (12).

3. Fastening device (10) according to either of the preceding claims,
wherein the closure element (17) has a first end (17a) which fastens the closure element (17) to the projection (18) ;
wherein the closure element (17) has a second end (17b) which, in the closed state (22), is in contact with an adjacent projection (18) and which, in the open state (24), is spatially separated from the adjacent projection (18) .

4. Fastening device (10) according to either of the preceding claims,
wherein the closure element (17) of the respective projections (18) has a preload mechanism which is configured to preload the closure element (17) in the closed state (22).

5. Fastening device (10) according to either of the preceding claims,
wherein the closure element (17) is able to be pivoted out, by application of an external force (F) to the closure element (17), in order, in this way, for the closure element (17) to be transferred from the closed state (22) into the open state (24).

6. Fastening device (10) according to either of the preceding claims,
wherein the projections (18) each have a free end (18a) to which the closure element (17) is attached;
wherein the projections (18) each have a connecting portion (18b) which connects the free end (18a) of the projection (18) to the load-bearing structure (12);
wherein the free end (18a) of the projection (18) is widened in relation to the connecting portion (18b) of the projection (18).

7. Fastening device (10) according to either of the preceding claims,
wherein the load-bearing structure (12) has a basic framework (15) with a circular base;
wherein the projections (18) are each arranged with equal spacings (d) to one another along a periphery (20) of the circular base;
wherein the basic framework (15) is connected to the fastening unit (14) in the region of a centre of the circular base.

8. Fastening device (10) according to either of the preceding claims,
wherein the closure unit (16) has substantially a cylindrical shape; or
wherein the closure unit (16) has substantially a frustoconical shape.

9. Fastening device (10) according to either of the preceding claims,
wherein at least some of the at least three projections (18) are arranged in an inclined manner in relation to a central axis (25) of the load-bearing structure (12);
wherein the central axis (25) of the load-bearing structure (12) forms a centre axis (25) of the periphery (20) of the load-bearing structure (12).

10. Transport system (100) having:
a fastening device (10) according to one of the preceding claims,
a guiding device (50),
wherein the guiding device (50) comprises a movable coupling element (51) which is selected from the group comprising: a cable, a chain, a wire, a strap, a string, a belt, a rope, a cord or a line.

11. Aircraft (100) having a fastening device (10) according to one of Claims 1 to 9.

## Revendications

1. Dispositif de fixation (10) pour fixer de manière amovible un dispositif de charge (30) à un dispositif de guidage (50), présentant :
une structure de support (12) avec une unité de fixation (14) et une unité de fermeture (16) ;
dans lequel l'unité de fixation (14) peut être reliée à l'unité de guidage (50) ;
dans lequel l'unité de fermeture (16) est réalisée pour fixer de manière amovible le dispositif de charge (30) ;
dans lequel l'unité de fermeture (16) présente au moins trois saillies (18) qui sont agencées à des intervalles prédéterminés (d) le long d'une circonférence (20) de la structure de support (12) ;
dans lequel chaque saillie (18) des au moins trois saillies (18) présente un élément de fermeture (17) qui est mobile entre un état fermé (22) et un état ouvert (24) ;
dans lequel deux saillies voisines (18) forment respectivement ensemble un évidement (19) destiné à recevoir le dispositif de charge (30) ou une partie (31) du dispositif de charge.

2. Dispositif de fixation (10) selon la revendication 1,
dans lequel les saillies (18) sont respectivement agencées à des distances égales (d) les unes des autres le long de la circonférence (20) de la structure de support (12).

3. Dispositif de fixation (10) selon l'une quelconque des revendications précédentes,
dans lequel l'élément de fermeture (17) présente une première extrémité (17a) qui fixe l'élément de fermeture (17) à la saillie (18) ;
dans lequel l'élément de fermeture (17) présente une deuxième extrémité (17b) qui, dans l'état fermé (22), est en contact avec une saillie voisine (18) et, dans l'état ouvert (24), est séparée spatialement de la saillie voisine (18).

4. Dispositif de fixation (10) selon l'une quelconque des revendications précédentes,
dans lequel l'élément de fermeture (17) des saillies respectives (18) présente un mécanisme de précontrainte qui est adapté pour précontraindre l'élément de fermeture (17) dans l'état fermé (22).

5. Dispositif de fixation (10) selon l'une quelconque des revendications précédentes,
dans lequel l'élément de fermeture (17) peut être pivoté vers l'extérieur en appliquant une force extérieure (F) à l'élément de fermeture (17), pour ainsi faire passer l'élément de fermeture (17) de l'état fermé (22) à l'état ouvert (24).

6. Dispositif de fixation (10) selon l'une quelconque des revendications précédentes,
dans lequel les saillies (18) présentent chacune une extrémité libre (18a) à laquelle l'élément de fermeture (17) est attaché ;
dans lequel les saillies (18) présentent chacune une section de liaison (18b) qui relie l'extrémité libre (18a) de la saillie (18) à la structure de support (12) ;
dans lequel l'extrémité libre (18a) de la saillie (18) est élargie par rapport à la section de liaison (18b) de la saillie (18).

7. Dispositif de fixation (10) selon l'une quelconque des revendications précédentes,
dans lequel la structure de support (12) présente un châssis de base (15) ayant une surface de base circulaire ;
dans lequel les saillies (18) sont chacune agencées à des distances égales (d) les unes des autres le long d'une circonférence (20) de la surface de base circulaire ;
dans lequel le châssis de base (15) est relié à l'unité de fixation (14) dans la zone d'un centre de la surface de base circulaire.

8. Dispositif de fixation (10) selon l'une quelconque des revendications précédentes,
dans lequel l'unité de fermeture (16) présente une forme essentiellement cylindrique ; ou
dans lequel l'unité de fermeture (16) présente essentiellement une forme de cône tronqué.

9. Dispositif de fixation (10) selon l'une quelconque des revendications précédentes,
dans lequel au moins certaines des au moins trois saillies (18) sont agencées de manière inclinée par rapport à un axe central (25) de la structure de support (12) ;
dans lequel l'axe central (25) de la structure de support (12) forme un axe central (25) de la circonférence (20) de la structure de support (12).

10. Système de transport (100), présentant :
un dispositif de fixation (10) selon l'une quelconque des revendications précédentes,
un dispositif de guidage (50),
dans lequel le dispositif de guidage (50) comprend un élément de couplage mobile (51) choisi dans le groupe comprenant : une corde, une chaîne, un fil, une courroie, un cordon, une bande, une cordelette, un cordon ou une ligne.

11. Aéronef (100) avec un dispositif de fixation (10) selon l'une quelconque des revendications 1 à 9.
